# EUROPÄISCHE PATENTSCHRIFT

(11) **EP 1 597 992 B1**
(45) Veröffentlichungstag und Bekanntmachung des Hinweises auf die Patenterteilung: **02.09.2009**
(21) Anmeldenummer: 05103184.7
(22) Anmeldetag: 20.04.2005
(51) Int. Cl.: A47J 43/12, A47J 31/44

(54) **Vorrichtung zum Aufschäumen einer Flüssigkeit**
Device for frothing a liquid
Dispositif pour faire mousser un liquide

(30) Priorität: 19.05.2004 DE 102004024721
(43) Veröffentlichungstag der Anmeldung: 23.11.2005
(73) Patentinhaber: MELITTA HAUSHALTSPRODUKTE GmbH & Co. Kommanditgesellschaft, D-32427 Minden (DE)
(72) Erfinder: Rohde, Florian, 32427, Minden (DE)
(74) Vertreter: Dantz, Jan Henning

(56) Entgegenhaltungen:
- WO-A-90/10411
- DE-A1- 10 050 719
- US-A- 5 614 130
- US-A1- 2005 029 685

## Beschreibung

Die vorliegende Erfindung betrifft eine Vorrichtung zum Aufschäumen einer Flüssigkeit, insbesondere Milch, mit einer Dampfzufuhr, über die eine in einem Gehäuse angeordnete Turbine angeordnet ist, und einer Luftzufuhr, wobei die Turbine über eine Welle mit einem Quirl zum Rühren der Flüssigkeit gekoppelt ist.

Aus der WO 90/10411 ist eine Vorrichtung zum Aufschäumen und gleichzeitigem Erhitzen einer Flüssigkeit, wie Milch, bekannt, bei der über Heißdampf ein Turbinenrad angetrieben wird, das innerhalb eines Emulgierkäfigs die aufzuschäumende Flüssigkeit ansaugt und verwirbelt. Nachteilig bei dieser Vorrichtung ist, dass die aufzuschäumende Flüssigkeit unmittelbar mit dem Turbinenrad in Kontakt kommt und daher Verunreinigungen sich ablagern können, die nur schlecht zu reinigen sind. Zudem ist die Ausbildung des Turbinenrades gleichzeitig als Quirl nachteilig, weil die Drehung der Turbine nicht optimal auf die Schaumbildung ausgerichtet ist.

Ferner ist aus der DE 100 50 719 eine Vorrichtung zur Erzeugung von Milchschaum bekannt, bei der an einem Rohr ein Turbinenrad vorgesehen ist, das einen endseitig am Rohr angeordneten Quirl antreibt. An dem Rohr sind ferner Luftzuführöffnungen und Schlitze zum Ansaugen von Milch ausgebildet. Dadurch tritt die Milch in einen Bereich innerhalb des Rohres ein, damit diese dann zu dem Quirl gefördert und dort aufgeschäumt wird. Dadurch können innerhalb des Rohres Verunreinigungen entstehen, die schlecht zu reinigen sind.

Es ist daher Aufgabe der vorliegenden Erfindung eine Vorrichtung zum Aufschäumen einer Flüssigkeit zu schaffen, die bei einfachem Aufbau ein effektives Aufschäumen ermöglicht und leicht zu reinigen ist.

Diese Aufgabe wird mit einer Vorrichtung mit den Merkmalen des Anspruches 1 gelöst. Erfindungsgemäß wird ein Dampf-Luft-Gemisch über ein Rohr im Bereich des Quirls eingeleitet und mit der Flüssigkeit verwirbelt. Dadurch kann der Quirl optimal auf die Anforderungen zur Schaumbildung abgestimmt sein, insbesondere kann für eine ausreichende Durchmischung der Flüssigkeit gesorgt werden. Zudem lässt sich die Vorrichtung hygienisch betreiben, da innerhalb des Rohres nur das Dampf-Luft-Gemisch zugeführt wird und die aufzuschäumende Flüssigkeit sich in diesem Bereich meist nicht ablagert und zumindest die mit der aufzuschäumenden Flüssigkeit in Kontakt kommenden Bereiche für die Reinigung gut zugänglich sind.

Gemäß einer bevorzugten Ausführungsform der Erfindung ist benachbart um den Quirl eine ringförmige Abdeckung vorgesehen, an der mehrere Durchströmöffnungen ausgebildet sind. Diese Abdeckung kann einerseits für eine Beruhigung der durch den Quirl verwirbelten Strömung sorgen und andererseits den Quirl vor Beschädigungen schützen, wenn dieser in ein Gefäß eingetaucht wird. Vorzugsweise weist die Abdeckung mehrere Stege auf, die gegenüber einer radialen Richtung der Drehachse des Quirls geneigte Strömungsflächen ausbilden. Dadurch lässt sich die Strömung besonders gut beruhigen, wobei die Vorsehung von Stegen den zusätzlichen Vorteil besitzt, dass diese leicht zu reinigen sind und eine offene Struktur aufweisen.

Erfindungsgemäß ist der Quirl mit einer Welle von einem Teil des Gehäuses der Turbine für Reinigungszwecke abnehmbar. Dabei können die Bauteile untereinander weiter zerlegbar sein, um in bestimmten Intervallen eine gründliche Reinigung durchzuführen. Die Abnehmbarkeit des Quirls hat den Vorteil, dass dieser meist nach unten gerichtet in ein Gefäß eingetaucht wird. Durch das Abziehen des Quirls kann dieser dann von unten leicht zugänglich mit einer Bürste zusammen mit der Abdeckung gereinigt werden.

Für eine einfache Handhabung der Vorrichtung ist die Einheit aus Gehäuse, Turbine, Quirl und Rohr höhenbeweglich. Dabei können auch noch weitere Bauteile mit dieser Einheit beweglich sein, die nicht explizit genannt sind, beispielsweise einen Anschluss einer Dampfzuführung, Ventile, Dichtungen etc. Vorzugsweise ist diese Einheit an einem Halter verschwenkbar gelagert, sodass der Quirl für die Verwendung in ein Gefäß eingetaucht werden kann und anschließend nach oben entfernt und zur Seite verschwenkbar ist, um das Gefäß zu entnehmen.

Wenn die Luftzufuhr in Strömungsrichtung gesehen vor der Turbine angeordnet ist, steht mehr Energie für die Luftförderung zur Verfügung, wobei der Einfluss auf den Wirkungsgrad der Turbine gering ist. Ferner kann die Luftzufuhr in einem Bereich am Gehäuse angeordnet sein, der geschützt ist und somit unanfällig für Verunreinigungen ist.

Gemäß einer weiteren Ausgestaltung der Erfindung ist die beimischbare Luftmenge einstellbar. Denn durch die Menge an Luft kann die Art des Schaums variiert werden, beispielsweise kann durch eine geringere Luftzufuhr ein feinerer Schaum erzeugt werden, der dafür länger haltbar ist. Die Luft kann dabei mittels eines Venturi-Effektes angesaugt werden.

Die Erfindung wird nachfolgend anhand eines Ausführungsbeispieles mit Bezug auf die beigefügten Zeichnungen näher erläutert. Es zeigen:

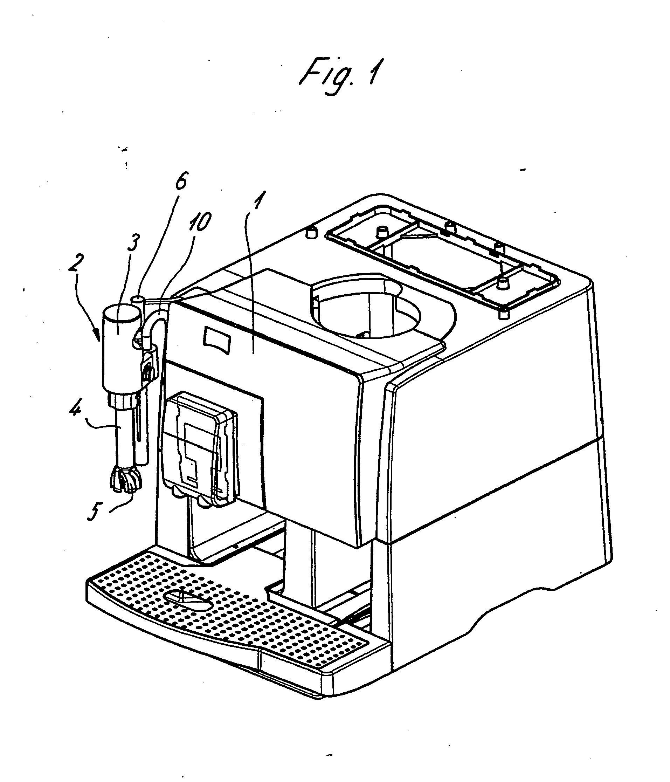

- Figur 1: eine perspektivische Ansicht eines Kaffeeautomaten mit einer erfindungsgemäßen Vorrichtung zum Aufschäumen einer Flüssigkeit;
- Figur 2: eine Detailansicht der Vorrichtung der Figur 1;
- Figur 3: eine perspektivische Detailansicht im Bereich der Turbine der Vorrichtung der Figur 1;
- Figur 4: eine perspektivische Ansicht der Vorrichtung der Figur 1 mit abgenommenen Quirl;
- Figur 5: eine perspektivische Detailansicht des Quirls schräg von unten;
- Figur 6A: eine perspektivische Explosionsdarstellung des Quirls und des Rohres der Vorrichtung der Figur 1, und
- Figur 6B: eine Detailansicht der Welle des Quirls der Figur 6A.

Ein Kaffeeautomat 1 besitzt einen kastenförmigen Aufbau und beinhaltet in an sich bekannter Weise eine Mahl- und Brühvorrichtung zur Erzeugung von Kaffee. Seitlich an dem Kaffeeautomaten 1 ist eine Vorrichtung 2 zum Aufschäumen einer Flüssigkeit, insbesondere Milch angeordnet. Die Vorrichtung 2 umfasst ein Gehäuse 3, an dessen Unterseite ein Rohr 4 vorgesehen ist, an der eine sich aufweitende glockenförmige Abdeckung 5 angeformt ist. Das Gehäuse 3 ist über einen Halter an einer Stange 6 des Kaffeeautomaten 1 höhenbeweglich und verschwenkbar gelagert.

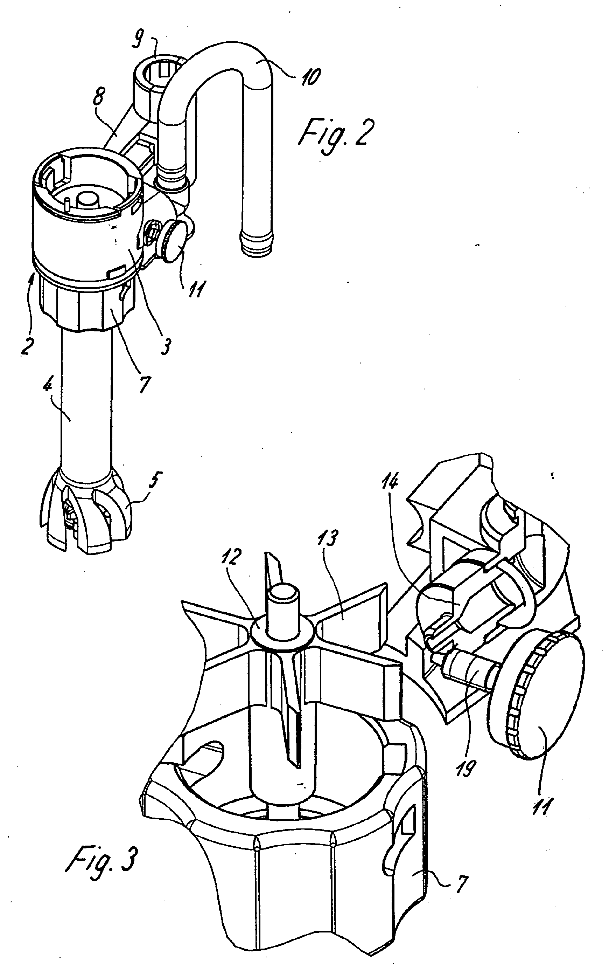

Wie in Figur 2 zu sehen ist, befindet sich am unteren Bereich des Gehäuses 3 ein Gehäusering 7, der mittels eines Bajonettverschlusses am Gehäuse 3 lösbar festgelegt ist. An dem Gehäuse 3 ist ein Ausleger 8 angeformt, der an seinem Ende eine Hülse 9 aufweist, die an der Stange 6 geführt ist. Dabei kann die Hülse 9 in unterschiedlichen Drehpositionen an der Stange 6 verrastbar sein, damit die Vorrichtung 3 in der gewünschten Schwenkposition verbleibt. In der Höhe kann die Hülse 9 klemmend an der Stange 6 festgelegt sein.

Ferner ist an dem Gehäuse 3 eine Dampfzufuhr 10 in Form eines Schlauches vorgesehen, die zusammen mit dem Gehäuse 3 höhenbeweglich ist.

In Figur 3 ist der Bereich der Dampfzufuhr 10 am Übergang zum Gehäuse 3 vergrößert dargestellt. An der Dampfzufuhr 10 ist eine Düse 14 angeschlossen, deren Querschnitt sich verjüngt und somit für eine Beschleunigung des durchströmenden Dampfes sorgt. Im Bereich des nachfolgenden Kanals mit verjüngtem Querschnitt ist eine der Umgebung in Verbindung stehende Luftdüse 19 angeordnet, über die Luft angesaugt wird.

Ferner ist an dem Gehäuse 3 eine Dampfzufuhr 10 in Form eines Schlauches vorgesehen, die zusammen mit dem Gehäuse 3 höhenbeweglich ist.

Die Menge an Luft ist über einen Drehknopf 11 verstellbar, sodass in das Gehäuse 3 ein vorbestimmtes Dampf-Luft-Gemisch eintritt. In dem Gehäuse 3 bzw. dem Gehäusering 7 ist eine Turbine 12 drehbar angeordnet, die radial hervorstehende Flügel 13 aufweist. Von der Turbine 12 strömt das Dampf-Luft-Gemisch dann durch das Rohr 4 nach unten.

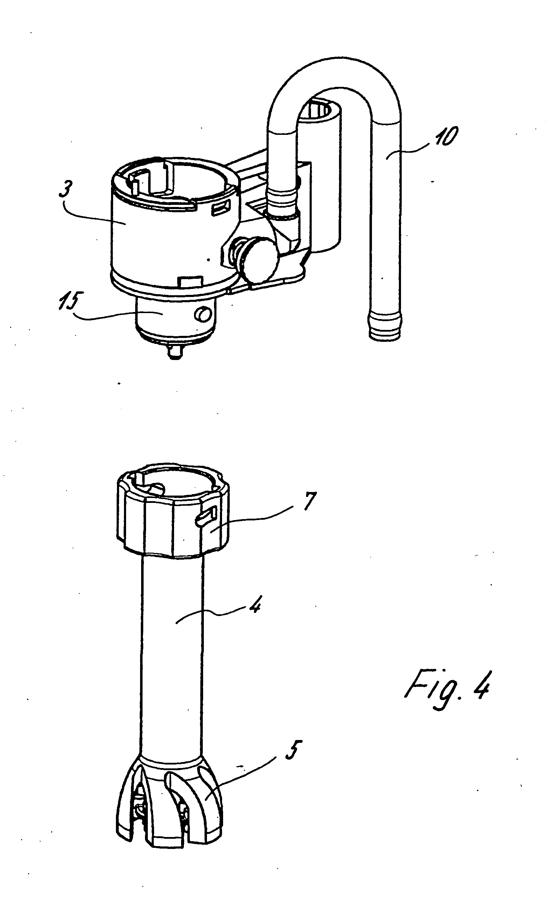

Wie in Figur 4 gezeigt ist, lässt sich der Gehäusering 7 von dem Gehäuse 3 abnehmen, wobei an dem Gehäuse 3 ein nach unten hervorstehender Stutzen 15 ausgebildet ist, der nach Art eines Bajonettverschlusses mit dem Gehäusering 7 verriegelbar ist. Die Einheit aus Gehäusering 7, Rohr 4, Abdeckung 5 als ein Bauteil aus Kunststoff sowie die darin angeordneten Teile können leicht gereinigt werden.

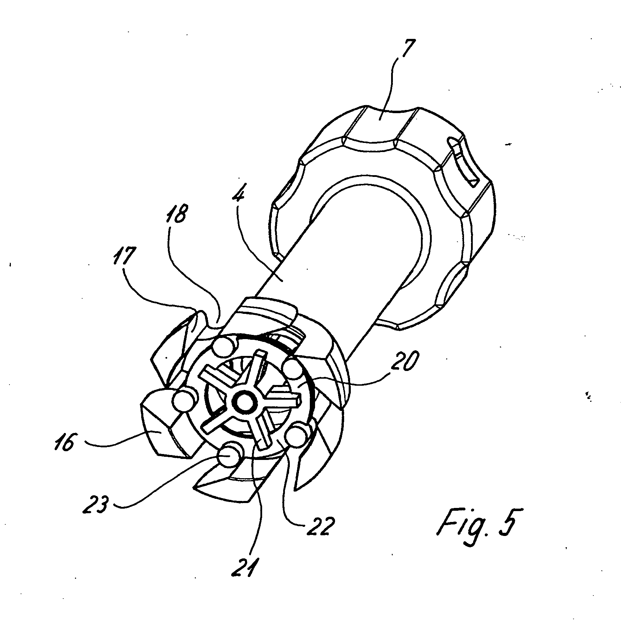

In Figur 5 ist die Abdeckung 5 von unten mit einem Quirl 20 gezeigt. Der Quirl 20 ist ringförmig ausgebildet und weist von einer mittleren Drehachse radial hervorstehende Flügel 21 auf. An dem Ring 22 sind ferner nach außen hervorstehende Vorsprünge 23 angeformt, die für eine Verwirbelung des Fluids sorgen.

Die um den Quirl 20 angeordnete Abdeckung 5 besitzt eine größere Längserstreckung und schirmt den Quirl 20 vor Kontakt mit anderen Bauteilen ab. Die Abdeckung 5 besitzt einen zum Rohr 4 gewandten geschlossenen Teil und nach unten hervorstehende Stege 16, zwischen denen offene Durchströmöffnungen 18 ausgebildet sind. Die Stege 16 sind zu einer radialen Richtung der Drehachse des Quirls 20 geneigt ausgebildet und besitzen somit Strömungsleitflächen 17 zur Verlangsamung der Strömung.

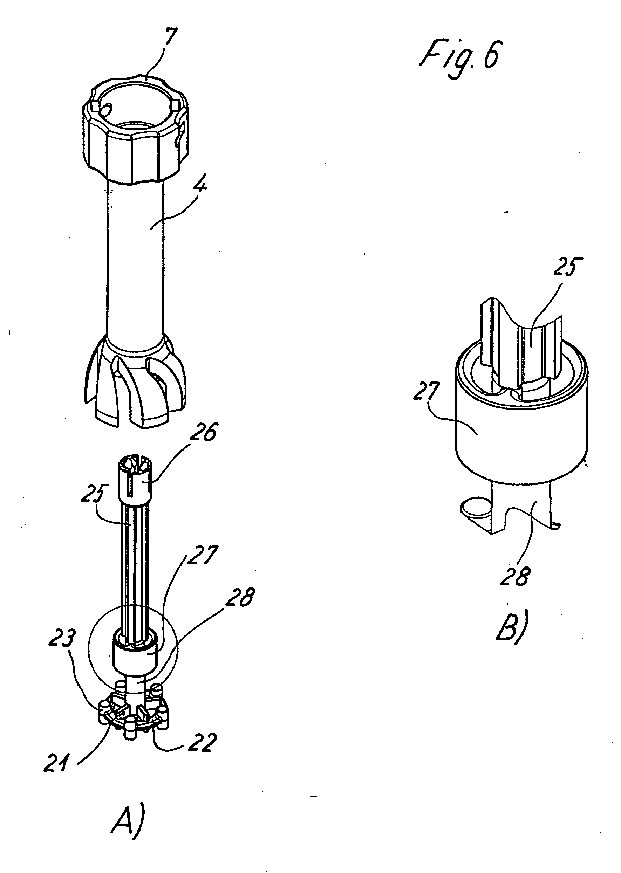

Wie in den Figuren 6A und 6B gezeigt ist, lässt sich die Vorrichtung weiter zerlegen, insbesondere kann eine Welle 25 mit einem Kopf 26 aus einer Kupplung mit der Turbine 12 aus dem Rohr 4 abgezogen werden, um gereinigt zu werden. An der Welle 25 ist ein elastischer Lagerring 27 fixiert, der in dem Rohr 4 im wesentlichen formschlüssig zur radialen Abstützung der Welle 25 aufgenommen ist. In dem Rohr 4 kann ein ringförmiger Vorsprung zur axialen Fixierung des Lagerringes 27 vorgesehen sein. Die Welle 25 ist am unteren Ende mit einem Verbindungsteil 28 versehen, an dem der Quirl 20 montiert ist. Auch diese Bauteile können bei Bedarf über lösbare Klemm- und/oder Steckverbindungen miteinander verbunden sein.

Für den Betrieb der Vorrichtung wird die Abdeckung 5 in eine Flüssigkeit, insbesondere Milch, eingetaucht und über die Dampfzufuhr 10 der Quirl 20 angetrieben. Dabei wird über einen Drehknopf 11 die zugeführte Luftmenge eingestellt und das Dampf-Luft-Gemisch tritt im Bereich des Quirls 20 in die Flüssigkeit ein und verwirbelt diese. Die Abdeckung 5 schützt dabei die Umgebung vor Spritzern. Nach dem Gebrauch der Vorrichtung wird diese nach oben bewegt und zur Entnahme des Behälters zur Seite weggeschwenkt werden.

Statt der gezeigten Geometrie des Quirls 20 können auch andere Quirlgeometrien und Abmessungen zum Verwirbeln der Flüssigkeit eingesetzt werden. Auch die Form der Abdeckung 5 als Hülse mit nach unten ausgreifenden Stegen sowie die Anzahl der Stege kann variiert werden.

## Patentansprüche

1. Vorrichtung zum Aufschäumen einer Flüssigkeit, insbesondere Milch, mit einer Dampfzufuhr (10), über die eine in einem Gehäuse (3, 7) angeordnete Turbine (12) antreibbar ist, und einer Luftzufuhr (19), wobei die Turbine (12) über eine Welle (25) mit einem Quirl (20) zum Rühren der Flüssigkeit gekoppelt ist, und wobei ein Dampf Luft-Gemisch über ein Rohr (4) im Bereich des Quirls (20) eingeleitet und mit der Flüssigkeit verwirbelt wird, **dadurch gekennzeichnet, dass** der Quirl (20) mit einer Welle (25) von einem Teil des Gehäuses (3) der Turbine (12) für Reinigungszwecke abnehmbar ist.

2. Vorrichtung nach Anspruch 1, **dadurch gekennzeichnet, dass** benachbart um den Quirl (20) eine ringförmige Abdeckung (5) vorgesehen ist, an der mehrere Durchtrittsöffnungen (18) ausgebildet sind.

3. Vorrichtung nach Anspruch 2, **dadurch gekennzeichnet, dass** die Abdeckung (5) mehrere Stege (16) aufweist, die gegenüber einer radialen Richtung der Drehachse des Quirls (20) geneigte Strömungsleitflächen (17) ausbilden.

4. Vorrichtung nach einem der Ansprüche 1 bis 3, **dadurch gekennzeichnet, dass** die Einheit aus Gehäuse (3, 7), Turbine (12), Quirl (20) und Rohr (4) höhenbeweglich ist.

5. Vorrichtung nach einem der Ansprüche 1 bis 4, **dadurch gekennzeichnet, dass** die Einheit aus Gehäuse (3, 7), Turbine (12), Quirl (20) und Rohr (4) an einem Halter (6) verschwenkbar gelagert ist.

6. Vorrichtung nach einem der Ansprüche 1 bis 5, **dadurch gekennzeichnet, dass** die Luftzufuhr (19) in Strömungsrichtung gesehen vor der Turbine (12) angeordnet ist.

7. Vorrichtung nach einem der Ansprüche 1 bis 6, **dadurch gekennzeichnet, dass** die durch die Luftzufuhr (19) beimischbare Luftmenge einstellbar ist.

## Claims

1. Device for foaming a liquid, particularly milk, with a steam feed (10), by way of which a turbine (12) arranged in a housing (3, 7) is drivable, and an air feed (19), wherein the turbine (12) is coupled by way of a shaft (25) with a whisk (20) for stirring the liquid, and wherein a steam/air mixture is introduced by way of a pipe (4) in the region of the whisk (20) and swirled together with the liquid, **characterised in that** the whisk (20) is removable together with a shaft (25) from a part of the housing (3) of the turbine (12) for the purpose of cleaning.

2. Device according to claim 1, **characterised in that** an annular cover (5), at which several passage openings (18) are formed, is provided adjacent to and around the whisk (20).

3. Device according to claim 2, **characterised in that** the cover (5) has several webs (16) which form flow guide surfaces (17) inclined relative to a radial direction of the axis of rotation of the whisk (20).

4. Device according to any one of claims 1 to 3, **characterised in that** the unit consisting of housing (3, 7), turbine (12), whisk (20) and pipe (4) is movable in the height.

5. Device according to any one of claims 1 to 4, **characterised in that** the unit consisting of housing (3, 7), turbine (12), whisk (20) and pipe (4) is mounted to be pivotable.

6. Device according to any one of claims 1 to 5, **characterised in that** the air feed (19) is arranged in front of the turbine (12) as seen in flow direction.

7. Device according to any one of claims 1 to 6, **characterised in that** the air quantity admixable by the air feed (19) is settable.

## Revendications

1. Dispositif pour faire mousser un liquide comportant une alimentation en vapeur (10) entraînant une turbine (12) installée dans un boîtier (3, 7), et une alimentation en air (19), la turbine (12) étant couplée par un arbre (25) à un agitateur (20) pour agiter le liquide, et un mélange vapeur-air est fourni par un tube (4) à la zone de l'agitateur (20) pour être agité avec le liquide,
**caractérisé en ce que**
l'agitateur (20) et un arbre (25) peuvent être enlevés d'une partie du boîtier (3) de la turbine (12) pour être nettoyés.

2. Dispositif selon la revendication 1,
**caractérisé par**
un capot (5) annulaire au voisinage de l'agitateur (20), ce capot comportant plusieurs orifices de passage (18).

3. Dispositif selon la revendication 2,
**caractérisé en ce que**
le capot (5) comporte plusieurs entretoises (16) formant des surfaces de guidage de flux (17), inclinées par rapport à la direction radiale de l'axe de rotation de l'agitateur (20).

4. Dispositif selon les revendications 1 à 3,
**caractérisé en ce que**
l'ensemble formé par le boîtier (3, 7), la turbine (12), l'agitateur (20) et le tube (4), est relevable.

5. Dispositif selon les revendications 1 à 4,
**caractérisé en ce que**
l'ensemble formé par le boîtier (3, 7), la turbine (12), l'agitateur (20) et le tube (4), est monté de manière pivotante sur un support (6).

6. Dispositif selon les revendications 1 à 5,
**caractérisé en ce que**
l'alimentation en air (19) est prévue en amont de la turbine (12) selon le sens de l'écoulement.

7. Dispositif selon les revendications 1 à 6,
**caractérisé en ce que**
l'alimentation en air (19) règle la quantité d'air mélangée.
